# FASCICULE DE BREVET EUROPEEN

(11) **EP 2 884 412 B1**
(45) Date de publication et mention de la délivrance du brevet: **17.04.2024**
(21) Numéro de dépôt: 14197939.3
(22) Date de dépôt: 15.12.2014
(51) Int. Cl.: H02J 3/00

(54) **Procédé de gestion d'une installation électrique et systeme de gestion d'une telle installation**
Verfahren zur Steuerung einer elektrischen Anlage, und Steuerungssystem einer solchen Anlage
Management method of an electric installation and management system of one such installation

(30) Priorité: 16.12.2013 FR 1362670
(43) Date de publication de la demande: 17.06.2015
(73) Titulaire: Schneider Electric Industries SAS, 92500 Rueil-Malmaison (FR)
(72) Inventeur: Waterlot, Frederic, 38050 Grenoble Cedex 09 (FR); Contini, Erick, 38050 Grenoble Cedex 09 (FR); Barocci, Christian, 38050 Grenoble Cedex 09 (FR)
(74) Mandataire: Lavoix

(56) Documents cités:
- KIM Y-I ET AL: "Implementing a Prototype System for Power Facility Manag ement using RFID/WSN", PROCEEDINGS OF WORLD ACADEMY OF SCIENCE, ENGINEERING AND TECHNOLOGY, WORLD ACADEMY OF SCIENCE, ENGINEERING AND TECHNOLOGY, TURKEY, vol. 16, 2006, pages 1-6, XP008167548, ISSN: 1307-6884
- Dirk Henrici ET AL: "Data Storage in RFID Systems" In: "Radio Frequency Identification Fundamentals and Applications. Bringing Research to Practice", février 2010 (2010-02), InTech, XP055138264, ISBN: 978-9-53-761973-2 pages 251-266, * Section 3.1; figure 5 *

## Description

La présente invention concerne un procédé de gestion d'une installation électrique comprenant plusieurs éléments électriques adaptés pour la circulation d'un courant depuis un point d'origine vers un point de distribution électrique et un système de gestion d'une telle installation électrique.

Dans le domaine des installations électriques, il est connu d'utiliser une pluralité d'éléments électriques formant l'installation électrique et permettant la distribution électrique. Les éléments électriques, également appelés préfabriqués, sont tels que des boîtiers d'alimentation électrique, des éléments de transport électrique, des éléments de distribution électrique comprenant une ou des prises de dérivation électrique. Ces installations sont qualifiées d'installations électriques préfabriquées et sont propres à être utilisées dans des bâtiments tels que des bâtiments industriels, commerciaux ou des bureaux...

Lors de la mise en place de ces installations, il est connu, par exemple du document « Implementing a prototype system for power facility management using RFID/WSN » de Kim Y-I et al, d'installer les différents éléments la composant suivant un modèle prédéfini en bureau d'étude, chaque élément comprenant une étiquette de mémorisation d'un identifiant unique, propre à être lu via un lecteur d'étiquette. Il est ainsi possible de connaître le nombre d'éléments disposés dans le bâtiment lors de la mise en place de l'installation et les éléments composant ladite installation.

Cependant, dans une telle installation, lorsqu'un élément supplémentaire est nécessaire par rapport au modèle réalisé en bureau d'étude, le modèle doit être remis à jour manuellement. La gestion de l'installation électrique est donc réalisée manuellement, et sa configuration est statique. Il est donc complexe et coûteux de modifier et de gérer l'installation électrique.

Le but de l'invention est donc de proposer un procédé de gestion de l'installation électrique permettant une gestion dynamique et améliorée de l'installation électrique.

A cet effet, l'invention a pour objet un procédé de gestion d'une installation électrique selon la revendication 1 ou 3.

Grâce à l'invention, l'organe de calcul est apte à modéliser l'installation électrique en fonction de données géométriques comprises dans le premier moyen de mémorisation de chaque élément électrique. Le procédé de gestion permet donc de modéliser l'installation électrique après la mise en place de chaque élément de l'installation dans un bâtiment et d'identifier la position de chaque élément, via les données géométriques associées à chaque premier identifiant. L'installation est donc modélisée de manière dynamique et toute modification de l'installation par rapport à un modèle préétabli est alors propre à être enregistrée, ce qui permet une configuration et une gestion simplifiées de l'installation électrique.

Suivant d'autres aspects avantageux de l'invention, le procédé est selon l'une quelconque des revendications 2 et 4 à 8.

L'invention a également pour objet un système de gestion de l'installation électrique selon la revendication 9 ou 10.

Suivant d'autres aspects avantageux de l'invention, le système comprend en outre une ou plusieurs des caractéristiques optionnelles des revendications 11 et 12.

L'invention sera mieux comprise et d'autres avantages de celle-ci apparaîtront plus clairement à la lumière de la description qui va suivre, donnée uniquement à titre d'exemple non limitatif, et faite en se référant aux dessins annexés sur lesquels :
- la figure 1 est une représentation schématique d'un ensemble électrique comprenant un système de gestion d'une installation électrique conforme à l'invention et ladite installation électrique,
- la figure 2 est un organigramme d'un procédé de gestion de l'installation électrique de la figure 1, conforme à l'invention.

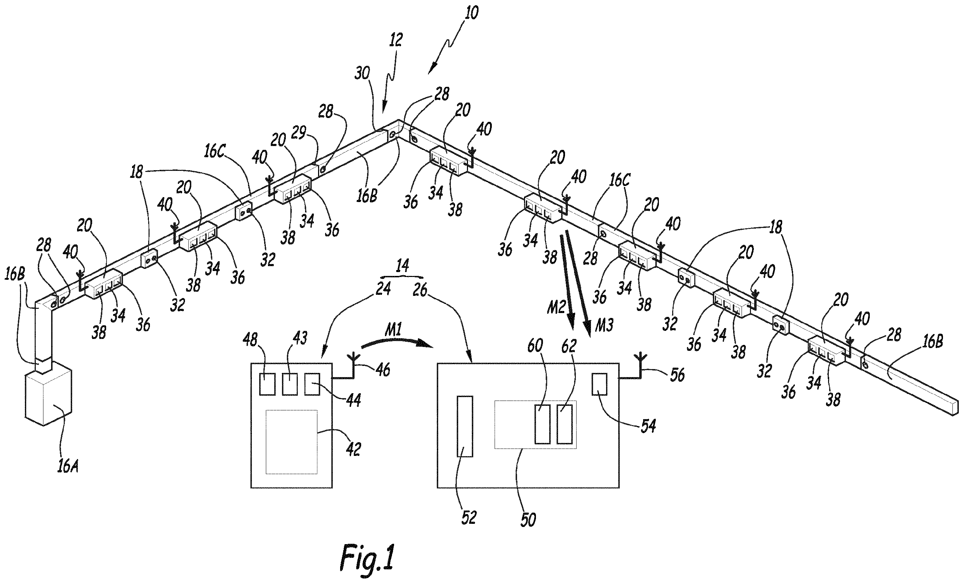

Sur la figure 1, un ensemble électrique 10 comprend une installation électrique 12 et un système 14 de gestion de l'installation électrique 12.

L'installation électrique 12 comprend plusieurs éléments électriques 16A, 16B, 16C formant une distribution électrique dans un bâtiment, non représenté, c'est-à-dire propres à assurer la circulation d'un courant depuis un point d'origine vers un point de distribution électrique. Dans l'exemple de la figure 1, l'installation électrique 12 comprend un boîtier d'alimentation électrique 16A, cinq éléments de transport électrique 16B, assimilables à des câbles de transport électrique et trois éléments de distribution électrique 16C comportant chacun plusieurs prises 18 de dérivation électrique propres à être connectées à un coffret 20 de dérivation électrique.

Le système de gestion 14 comprend un terminal mobile 24 et un concentrateur électronique de données 26, également appelé organe de calcul.

Chaque élément électrique 16A, 16B, 16C comprend un premier organe 28 de mémorisation d'un premier identifiant unique associé à l'élément électrique 16A, 16B, 16C correspondant. Les éléments électriques 16A, 16B, 16C sont généralement des éléments électriques préfabriqués propres à être assemblés les uns aux autres afin de former l'installation électrique 12. Chaque élément électrique 16A, 16B, 16C comprend deux extrémités 29, 30 de connexion à un autre élément électrique 16A, 16B, 16C.

Le boîtier d'alimentation 16A est généralement propre à délivrer une basse tension, c'est-à-dire une tension inférieure à 1000 volts.

Les éléments de transport 16B comprennent notamment des éléments rectilignes et des éléments en forme de coude pour le transport d'électricité dans le bâtiment.

Les éléments de distribution 16C sont propres, via les prises de dérivation 18 et les coffrets de dérivation 20, à distribuer une partie de l'énergie électrique, traversant l'installation électrique 12 et délivrée par le boîtier d'alimentation 16A, à des organes à alimenter électriquement, tels que des luminaires ou des machines électriques, non représentés. Chaque élément de distribution 16C comprend un nombre prédéterminé de prises 18.

Chaque prise de dérivation 18 comprend un deuxième organe 32 de mémorisation d'un numéro de référence unique associé à la prise 18 correspondante. Sur la figure 1, seules les prises 18 libres, c'est-à-dire non connectées à l'un des coffrets de dérivation 20, sont représentées, les prises 18 connectées à l'un des coffrets de dérivation 20 étant masquées par le coffret de dérivation 20 correspondant.

Chaque coffret de dérivation 20 est assimilable à un tableau électrique connecté à l'une des prises de dérivation 18. Chaque coffret de dérivation 20 comprend un premier organe d'identification 34 propre à lire le deuxième organe de mémorisation 32 de la prise de dérivation 18 à laquelle il est associé, c'est-à-dire à communiquer avec ce deuxième organe de mémorisation 32, préférentiellement par ondes radio électriques, pour acquérir les données contenues dans le deuxième organe de mémorisation 32. Chaque coffret de dérivation 20 est alors propre à acquérir le numéro de référence de la prise de dérivation 18 à laquelle il est connecté.

Chaque coffret de dérivation 20 comprend un capteur 36 de mesure de grandeurs électriques relatives à l'installation électrique 12, telles qu'un courant traversant le coffret de dérivation ou traversant l'élément de distribution 16C correspondant ou encore telle qu'une tension de l'élément de distribution 16C correspondant.

Chaque coffret de dérivation 20 comprend également un premier organe 38 de communication radioélectrique, tel qu'un émetteur-récepteur radioélectrique et une première antenne 40 radioélectrique.

Le terminal mobile 24 comprend un organe 42 de traitement de données, un deuxième organe d'identification 43, et un deuxième organe de communication radioélectrique 44 propre à transmettre un premier message M1 vers le concentrateur de données 26, via une deuxième antenne radioélectrique 46. Le terminal mobile 24 comprend également un écran de visualisation 48.

Le concentrateur 26 comprend une unité de traitement 50, un organe de visualisation 52, un troisième organe de communication radioélectrique 54 et une troisième antenne radioélectrique 56.

Chaque premier organe de mémorisation 28 est propre à mémoriser, en plus du premier identifiant unique associé à l'élément électrique 16A, 16B, 16C correspondant, des données géométriques de l'élément électrique 16A, 16B, 16C correspondant. Les données géométriques comprennent les positions des deux extrémités de connexion 29, 30 de l'élément 16A, 16B, 16C correspondant, dans un référentiel associé à l'installation électrique 12.

Avantageusement, les données géométriques comprennent également des informations correspondant à la forme de l'élément 16A, 16B, 16C entre les deux extrémités de connexion 29, 30.

Chaque premier organe de mémorisation 28 est propre à communiquer par ondes radioélectriques avec le terminal mobile 24, c'est-à-dire avec le deuxième organe d'identification 43. Chaque premier organe de mémorisation 28 est par exemple en forme d'une étiquette de communication radioélectrique, telle qu'une étiquette de communication en champ proche (NFC, de l'anglais *Near Field Communication*) ou une étiquette d'identification par radiofréquence (RFID, de l'anglais *Radio Frequency IDentification).*

En complément, chaque premier organe de mémorisation 28 de chaque élément de distribution électrique 16C comprend le nombre de prises de dérivation 18 associées à l'élément de distribution 16C correspondant.

Chaque deuxième organe de mémorisation 32 est par exemple en forme d'une étiquette radioélectrique, telle qu'une étiquette de communication en champ proche (NFC) ou une étiquette d'identification par radiofréquence (RFID).

Chaque organe d'identification 34 est apte à acquérir les données comprises dans le deuxième organe de mémorisation 32, c'est-à-dire le numéro de référence de la prise de dérivation 18 correspondante.

Chaque premier organe de communication 38 et la première antenne radioélectrique 40 associée sont propres à communiquer par ondes radioélectriques avec l'organe de calcul 26, et plus précisément avec la troisième antenne radioélectrique 56 et le troisième organe de communication radioélectrique 54. Chaque premier organe de communication 38 est apte à transmettre un deuxième message M2, via la première antenne 40 et vers l'organe de calcul 26.

Le deuxième message M2 comprend le numéro de référence acquis par le premier organe d'identification 34, ainsi qu'une adresse unique associée à chaque coffret de dérivation 20 correspondant, et permettant l'identification de chaque coffret de dérivation 20 par l'organe de calcul 26. L'adresse unique correspond à un deuxième identifiant unique de chaque coffret 20.

Suite à la transmission du deuxième message M2, chaque premier organe de communication 38 est apte à transmettre, vers l'organe de calcul 26, un troisième message M3 comprenant les grandeurs électriques mesurées par le capteur 36, ainsi que l'adresse du coffret de dérivation 20 correspondant.

Avantageusement, les premier 38, deuxième 44 et troisième 54 organes de communication, ainsi que les première 40, deuxième 46 et troisième 56 antennes sont conformes au protocole de communication ZIGBEE ou ZIGBEE GREEN POWER, basés sur la norme IEE-802.15.4.

L'organe de traitement 42 est propre à traiter des données acquises par le deuxième organe d'identification 43.

Le deuxième organe d'identification 43 est propre à établir une communication par ondes radioélectriques avec chaque premier organe de mémorisation 28, afin d'acquérir les données mémorisées par chaque premier organe de mémorisation 28, c'est-à-dire le premier identifiant et les données géométriques associées, ainsi qu'éventuellement le nombre de prises 18 pour les éléments de distribution 16C. Le deuxième organe d'identification 43 forme un lecteur de chaque premier organe de mémorisation 28, et est par exemple un lecteur d'étiquette radioélectrique.

Le deuxième organe d'identification 43 est propre à acquérir chaque premier identifiant et les données géométriques associées suivant un ordre de mise en place des éléments de l'installation, c'est-à-dire depuis un élément d'origine correspondant au boîtier d'alimentation électrique 16A, jusqu'à un élément de fin disposé à l'opposé de l'élément d'origine 16A par rapport au reste de l'installation électrique 12. L'élément de fin correspond, sur la figure 1, à un élément de transport 16B.

Le deuxième organe de communication 44 est propre à transmettre le premier message M1 vers l'organe de calcul 26, via la deuxième antenne 46. Le deuxième organe de communication 44 est donc propre à établir une liaison radioélectrique avec l'organe de calcul 26, c'est-à-dire avec la troisième antenne 56 et le troisième organe de communication 54.

Le premier message M1 comprend le premier identifiant, les données géométriques associées de chaque élément électrique 16A, 16B, 16C et le nombre de prises 18 pour chaque élément de distribution 16C. Dans le premier message M1 les données acquises par le deuxième organe d'identification 43 sont enregistrées suivant l'ordre de mise en place des éléments de l'installation électrique 12.

Le moyen de visualisation 48 est propre à afficher les données acquises par le deuxième organe d'identification 43, c'est-à-dire le premier identifiant, les données géométriques pour chaque élément 16A, 16B, 16C, ainsi qu'éventuellement le nombre de prises 18 de chaque élément de distribution 16C.

L'unité de traitement 50 comprend un processeur 60 et une mémoire 62 associée au processeur 60.

L'organe de visualisation 52 est propre à afficher les données transmises par le terminal mobile 24 et les coffrets de dérivation 20 à l'organe de calcul 26. L'organe de visualisation 52 est également propre à afficher des informations calculées par le processeur 60.

La mémoire 62 est apte à stocker un logiciel 64 de calcul d'une modélisation de l'installation électrique 12.

Le logiciel de calcul 64 est propre à modéliser chaque élément électrique 16A, 16B, 16C, pour lequel l'organe de calcul 26 reçoit le premier identifiant via le premier message M1, cette modélisation étant fonction des données géométriques et du nombre de prises acquis et transmis via le premier message M1. Le logiciel de calcul 64 est également apte à modéliser chaque coffret de dérivation 20 de la part duquel il reçoit le deuxième message M2 et à l'associer à la prise de dérivation 18 correspondante. En effet, le numéro de référence transmis via le deuxième message M2 par le coffret de dérivation 20 comprend généralement un certain nombre de chiffres correspondant au premier identifiant de l'élément de distribution 16C comprenant la prise de dérivation 18 correspondante, ainsi qu'un autre chiffre correspondant au numéro de la prise de dérivation 18, c'est-à-dire à sa position sur l'élément de distribution 16C.

Le logiciel de calcul 64 est également apte, suite à la réception des troisièmes messages M3, à associer, au sein de la modélisation, les grandeurs électriques mesurées par chaque capteur 36 au coffret de dérivation 20 correspondant et à sa position dans l'installation électrique 12.

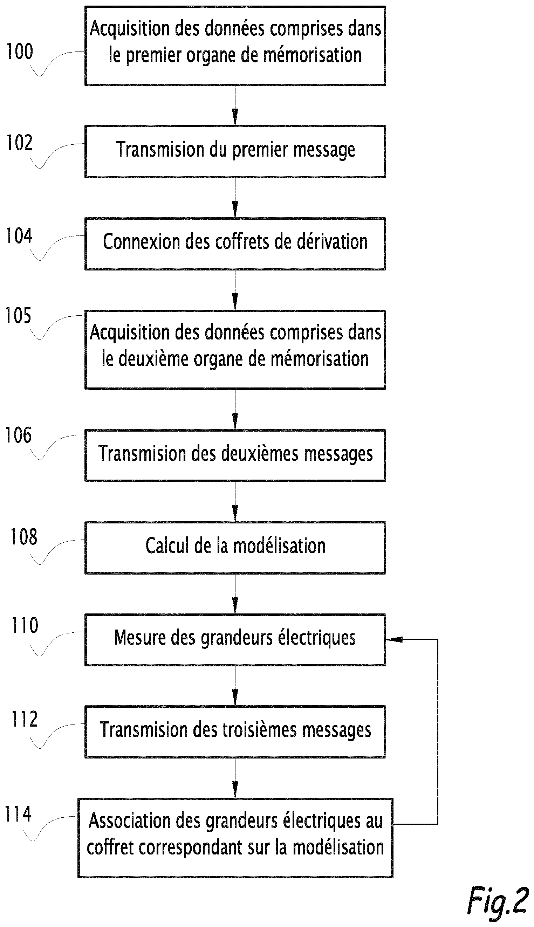

Le fonctionnement du système de gestion 14 selon l'invention va désormais être expliqué à l'aide de la figure 2.

Lors d'une étape initiale 100, le terminal mobile 24, et plus précisément le deuxième organe d'identification 43, vient lire chaque organe de mémorisation 28, par radiocommunication, dans l'ordre de mise en place des éléments électriques 16A, 16B, 16C dans l'installation 12. Le deuxième organe d'identification 43 acquiert alors chaque premier identifiant et les données géométriques associées. En complément, au cours de cette étape 100 d'acquisition, le deuxième organe d'identification 43 acquiert, pour chaque élément de distribution 16C, le nombre de prises de dérivation 18 correspondant.

Puis, au cours d'une étape 102, le terminal mobile 24 transmet les données acquises, c'est-à-dire le premier message M1, à l'organe de calcul 26 qui les conserve dans sa mémoire 62.

Ensuite, lors d'une étape 104, les coffrets de dérivation 20 sont connectés aux prises de dérivation 18 correspondantes puis acquièrent, lors d'une étape 105, via l'organe d'identification 34 les données enregistrées dans le deuxième organe de mémorisation 32. Plus précisément, les premiers organes d'identification 34 et les deuxièmes organes de mémorisation 32 sont positionnés de telle manière que lors de la connexion de l'un des coffrets de dérivation 20 à la prise de dérivation 18 correspondante, l'organe d'identification 34 vient lire le deuxième organe de mémorisation 32 et les données qu'il contient, c'est-à-dire le numéro de référence de la prise de dérivation 18.

Lors d'une étape 106, chaque coffret de dérivation 20 transmet à l'organe de calcul 26 le deuxième message M2.

Ensuite, lors d'une étape 108, le logiciel de calcul 64 est propre à calculer la modélisation de l'installation électrique 12 en fonction des données reçues via les premier M1 et deuxième M2 messages, c'est-à-dire en fonction des données géométriques, du numéro de référence, des premier et deuxième identifiants, ainsi qu'éventuellement du nombre de prises de dérivation 18 de chaque élément de distribution 16C. Le logiciel de calcul 64 calcule la modélisation également en fonction de l'ordre de mise en place des éléments 16A, 16B, 16C de l'installation électrique 12, c'est-à-dire depuis l'élément d'origine jusqu'à l'élément de fin, puisque le premier message M1 comprend des données triées dans l'ordre de leur acquisition. Ainsi, lors de l'étape de calcul de la modélisation 108, le logiciel de calcul 64 modélise chaque coffret de dérivation 20 et l'associe, au sein de la modélisation, à la position de la prise de dérivation 18 correspondante.

Suite à l'étape de modélisation 108, l'installation électrique 12 est configurée, et le système de gestion 14 est apte à fonctionner sur la base de la modélisation réalisée. Ainsi, au cours d'une étape 110, chaque coffret de dérivation 20 mesure les grandeurs électriques via son capteur 36. Puis, au cours d'une étape 112, chaque coffret de dérivation 20 transmet le troisième message M3 à l'organe de calcul 26.

Ensuite, lors d'une étape 114, le logiciel de calcul 64 associe, au sein de la modélisation, les grandeurs électriques mesurées au coffret de dérivation 20 correspondant et à sa position dans l'installation électrique 12. En effet, chaque coffret de dérivation 20 est associé à une prise de dérivation 18 via la connaissance du numéro de référence et du deuxième identifiant, c'est-à-dire de l'adresse du coffret de dérivation 20.

Les étapes 110, 112 et 114 sont répétées avec une périodicité prédéterminée, afin que le système de gestion 14 vérifie le bon fonctionnement de l'installation électrique 12 régulièrement.

Avantageusement, le logiciel de calcul 64 est propre à modéliser et à calculer de manière dynamique le nombre de prises de dérivation connectées à un coffret de dérivation 20, ainsi que le nombre de prises de dérivation 18 libres, tout au long de la gestion de l'installation électrique 12. En effet, à chaque connexion ou déconnexion d'un coffret de dérivation 20 par rapport à une prise 18, le coffret de dérivation est propre à transmettre le deuxième message M2.

Avantageusement, lors de la modification de l'installation électrique 12 via, par exemple, l'ajout d'un élément électrique 16A, 16B, 16C complémentaire, un opérateur récupère, à l'aide du terminal mobile 24, les données comprises dans le premier organe de mémorisation 28 de l'élément électrique supplémentaire et identifie ensuite les éléments électriques entre lesquels est inséré l'élément électrique supplémentaire. Le logiciel de calcul 64 recalcule alors la modélisation de l'installation électrique 12 afin de modéliser l'installation électrique modifiée.

Avantageusement encore, les capteurs 36 réalisent également des mesures de tension, et l'organe de calcul 26 calcule l'énergie électrique et/ou la puissance électrique correspondantes.

Le système de gestion 14 permet ainsi de gérer en temps réel la disponibilité d'énergie électrique en tout point de l'installation électrique 12. De plus, le système de gestion permet de localiser les consommations électriques dans l'installation électrique 12.

L'enregistrement des données propres à chaque élément électrique 16A, 16B, 16C en fonction de leur ordre de mise en place permet en outre de modéliser ces éléments dans l'ordre de mise en place et d'obtenir une modélisation correspondant à l'installation électrique 12.

Le système de gestion 14 permet la mise à jour de l'architecture de l'installation électrique 12. De plus, grâce à la connaissance du nombre de prises par l'élément de distribution 16C, le système de gestion 14 permet de vérifier que le numéro de chaque prise de dérivation 18, compris dans le numéro de référence, n'est pas supérieur au nombre de prises de dérivation, et ainsi qu'il n'y a pas d'erreur de configuration du système. De plus, le système de gestion 14 permet d'associer toutes les grandeurs électriques mesurées par les coffrets de dérivation 20, à la position des coffrets de dérivation dans l'installation. Il est ainsi possible en cas de défaut électrique, c'est-à-dire par exemple lorsqu'une des grandeurs électriques est supérieure à un seuil de référence, d'indiquer à l'opérateur la localisation du défaut électrique et l'élément électrique 16A, 16B, 16C défaillant.

Par ailleurs, le système de gestion 14 permet de vérifier que la modélisation réalisée est bien conforme à un modèle prédéterminé réalisé en bureau d'étude. Le système 14 permet également de gérer la disponibilité des prises de dérivation 18 en temps réel.

L'utilisation des étiquettes radioélectriques permet une identification de chaque élément 16A, 16B, 16C et la sauvegarde des données géométriques permet une meilleure modélisation de l'installation électrique 12.

Le système de gestion 14 permet donc de simplifier l'utilisation et une modification de l'installation électrique 12. Le système de gestion 14 permet d'indiquer et d'enregistrer toute modification de la configuration de l'installation électrique 12, ainsi que de gérer son fonctionnement de façon améliorée.

En variante, préalablement à l'étape d'acquisition 100, une fois les éléments électriques 16A, 16B, 16C mis en place, l'opérateur utilise le terminal mobile 24, fixe une valeur pour chaque premier identifiant, ou encore affecte une adresse spécifique au fonctionnement du système de gestion 14, à chaque élément électrique 16A, 16B, 16C, cette adresse étant enregistrée dans le premier organe de mémorisation 28. Dans cette variante, lors de l'étape d'acquisition 100, le terminal mobile 24 acquiert lesdites adresses spécifiques ou les nouvelles valeurs fixées des premiers identifiants.

Selon une autre variante, les données géométriques comprennent la position de l'une des extrémités 30, par rapport à l'autre extrémité 29, formant une extrémité de référence. Dans cette variante, le logiciel de calcul 64 est propre, lors de la modélisation de l'installation 12, à calculer la position de chaque élément 16A, 16B, 16C par rapport à l'élément d'origine, c'est-à-dire au boîtier d'alimentation électrique 16A dans l'exemple de la figure 1. Dans cette variante encore, lors du calcul de la modélisation, le boîtier associe pour chaque élément donné 16B, 16C différent de l'élément d'origine 16A, la position de l'extrémité 29 de l'élément 16B, 16C à celle de l'extrémité 30, définie par rapport à l'élément d'origine16A, d'un élément 16B, 16C adjacent à l'élément donné 16B, 16C et positionné juste avant l'élément donné par rapport au boîtier d'alimentation 16A.

Selon une autre variante, lors de l'étape d'acquisition 100, le terminal mobile 24, et plus précisément le deuxième organe d'identification 43, acquiert, pour chaque élément de distribution 16C, les données mémorisées par le deuxième organe de mémorisation 32. Ceci permet de connaître le nombre de prises de dérivation compris dans chaque élément de distribution 16C.

Selon une autre variante, chaque coffret de dérivation 20, et plus précisément les premiers organes de communication radioélectrique 38 et la première antenne 40, sont conformes au protocole de communication TCP/IP, de même que les deuxième et troisième organes de communication 44, 54 et les antennes 46, 56.

Selon une autre variante, l'organe de traitement 42 comprend un logiciel de calcul similaire au logiciel de calcul 64. Dans cette variante le terminal mobile est propre à calculer et à afficher la modélisation, ce qui permet notamment à l'opérateur, au cours de la mise en place des éléments électriques, de vérifier que l'installation correspond au modèle prédéterminé, par exemple en bureau d'étude.

Selon une autre variante, chaque coffret de dérivation est propre à réaliser des mesures de température, d'humidité ou encore tout autre type de mesure relative au fonctionnement de l'installation électrique 12 et à transmettre au concentrateur de données 26 lesdites mesures. Dans cette variante, le logiciel de calcul 64 associe alors à chaque grandeur mesurée la position où elle a été mesurée dans l'installation 12.

Selon une autre variante, les éléments 16A, 16B, 16C comprennent plus de deux extrémités de connexion.

Dans la description ci-dessus, le logiciel de calcul 64 correspond à des instructions logicielles et forme un programme d'ordinateur apte à être exécuté par un ordinateur. L'ordinateur correspond, par exemple, à l'unité de traitement 50.

De plus, le procédé présenté à la figure 2 est mis en oeuvre par ordinateur.

Plus généralement, dans la description ci-dessus, le deuxième organe d'identification 43 est un module de communication avec chaque premier organe de mémorisation 28.

Ainsi, l'organe d'identification 43, le premier 28 et le deuxième 32 organes de mémorisation et l'organe de calcul 26 sont des moyens électroniques participant à la mise en oeuvre du procédé de la figure 2.

Les caractéristiques des différents modes de réalisation et variantes envisagés ci-dessus sont combinables entre elles.

## Revendications

1. Procédé de gestion d'une installation électrique (12) comprenant plusieurs éléments électriques (16A, 16B, 16C) pour la circulation d'un courant depuis un point d'origine vers un point de distribution électrique, chaque élément comprenant un premier moyen de mémorisation (28) d'un premier identifiant unique associé audit élément (16A, 16B, 16C), le procédé comprenant l'étape suivante :
- a) l'acquisition (100), via un moyen d'identification (43), du premier identifiant de chaque élément (16A, 16B, 16C) appartenant à l'installation (12),
**caractérisé en ce que** chaque premier moyen de mémorisation (28) est également propre à sauvegarder des données géométriques de l'élément correspondant, lesdites données étant acquises lors de l'étape d'acquisition a), via le moyen d'identification (43), et associées au premier identifiant correspondant, et
**en ce que** le procédé comprend en outre l'étape suivante :
- b) le calcul (108), via un organe de calcul (26), d'une modélisation de l'installation électrique en fonction des données géométriques acquises,
les éléments comprenant au moins un élément de distribution électrique (16C), chaque élément de distribution (16C) comportant un nombre prédéterminé de prises (18) de dérivation propres à être connectées chacune à un coffret (20) de dérivation électrique, chaque premier moyen de mémorisation (28) correspondant comprenant ledit nombre de prises de dérivation (18), et pour chaque élément de distribution (16C), le calcul de la modélisation (108) étant réalisé en fonction du nombre de prises de dérivation (18) acquis,
chaque élément (16A, 16B, 16C) comprenant au moins deux extrémités de connexion (29, 30), les données géométriques comprenant les positions des extrémités de connexion (29, 30) de l'élément (16A, 16B, 16C) correspondant, dans un référentiel associé à l'installation électrique (12),
suite, à l'étape de calcul b), le procédé comprenant les étapes suivantes :
- c) la mesure (110), par chaque coffret de dérivation électrique (20), d'une ou plusieurs grandeurs électriques relatives à l'installation électrique (12),
- d) la transmission (112) de la ou des grandeurs mesurées à l'organe de calcul (26),
- e) l'association (114), au sein de la modélisation, des grandeurs électriques mesurées au coffret de dérivation (20) correspondant et à sa position dans l'installation électrique (12).
le procédé comprenant en outre, lorsqu'une des grandeurs électriques est supérieure à un seuil de référence, une indication à un opérateur de la localisation d'un défaut électrique de l'élément électrique (16A, 16B, 16C) défaillant.

2. Procédé selon la revendication 1, **caractérisé en ce que** lors de l'étape d'acquisition a), le moyen d'identification (43) acquiert chaque premier identifiant et les données géométriques associées suivant un ordre de mise en place des éléments (16A, 16B, 16C) dans l'installation, depuis un élément d'origine correspondant à un boîtier d'alimentation électrique (16A), jusqu'à un élément de fin disposé à l'opposé de l'élément d'origine par rapport au reste de l'installation (12), le calcul (108) de la modélisation étant réalisé en fonction dudit ordre de mise en place.

3. Procédé de gestion d'une installation électrique (12) comprenant plusieurs éléments électriques (16A, 16B, 16C) pour la circulation d'un courant depuis un point d'origine vers un point de distribution électrique, chaque élément comprenant un premier moyen de mémorisation (28) d'un premier identifiant unique associé audit élément (16A, 16B, 16C), le procédé comprenant l'étape suivante :
- a) l'acquisition (100), via un moyen d'identification (43), du premier identifiant de chaque élément (16A, 16B, 16C) appartenant à l'installation (12),
**caractérisé en ce que** chaque premier moyen de mémorisation (28) est également propre à sauvegarder des données géométriques de l'élément correspondant, lesdites données étant acquises lors de l'étape d'acquisition a), via le moyen d'identification (43), et associées au premier identifiant correspondant,
**en ce que** le procédé comprend en outre l'étape suivante :
- b) le calcul (108), via un organe de calcul (26), d'une modélisation de l'installation électrique en fonction des données géométriques acquises,
lors de l'étape d'acquisition a), le moyen d'identification (43) acquérant chaque premier identifiant et les données géométriques associées suivant un ordre de mise en place des éléments (16A, 16B, 16C) dans l'installation, depuis un élément d'origine correspondant à un boîtier d'alimentation électrique (16A), jusqu'à un élément de fin disposé à l'opposé de l'élément d'origine par rapport au reste de l'installation (12), le calcul (108) de la modélisation étant réalisé en fonction dudit ordre de mise en place,
les éléments comprenant au moins un élément de distribution électrique (16C), chaque élément de distribution (16C) comportant un nombre prédéterminé de prises (18) de dérivation propres à être connectées chacune à un coffret (20) de dérivation électrique, chaque premier moyen de mémorisation (28) correspondant comprenant ledit nombre de prises de dérivation (18), et pour chaque élément de distribution (16C), le calcul de la modélisation (108) étant réalisé en fonction du nombre de prises de dérivation (18) acquis,
chaque élément (16A, 16B, 16C) comprenant au moins deux extrémités de connexion (29, 30), dont une extrémité de référence (29), les données géométriques comprenant la position des extrémités de connexion (29, 30) par rapport à l'extrémité de référence (29), l'organe de calcul étant propre à calculer la position de chaque extrémité de connexion (29, 30) par rapport à l'élément d'origine (16A),
suite, à l'étape de calcul b), le procédé comprenant les étapes suivantes :
- c) la mesure (110), par chaque coffret de dérivation électrique (20), d'une ou plusieurs grandeurs électriques relatives à l'installation électrique (12),
- d) la transmission (112) de la ou des grandeurs mesurées à l'organe de calcul (26),
- e) l'association (114), au sein de la modélisation, des grandeurs électriques mesurées au coffret de dérivation (20) correspondant et à sa position dans l'installation électrique (12).
le procédé comprenant en outre, lorsqu'une des grandeurs électriques est supérieure à un seuil de référence, une indication à un opérateur de la localisation d'un défaut électrique de l'élément électrique (16A, 16B, 16C) défaillant.

4. Procédé selon l'une des revendications précédentes, **caractérisé en ce que** le procédé comprend, précédemment à l'étape de calcul b), les étapes suivantes :
- a') la connexion (104) d'un ou de coffrets de dérivation (20) sur une ou des prises de dérivation (18), la ou chaque prise de dérivation comprenant un deuxième moyen (32) de mémorisation d'un numéro de référence unique associé à ladite prise,
- a") l'acquisition (105) du numéro de référence de chaque prise de dérivation (18) connectée à un coffret de dérivation (20).

5. Procédé selon la revendication 4, **caractérisé en ce que**, suite à l'étape d'acquisition a"), le procédé comprend, pour chaque coffret de dérivation (20), l'étape suivante :
- a‴) la transmission à l'organe de calcul (26) du numéro de référence correspondant et d'un deuxième identifiant unique associé au coffret de dérivation (20), l'organe de calcul (26) étant propre au cours de l'étape de calcul b), à modéliser chaque coffret de dérivation (20) et à l'associer, au sein de la modélisation, à la position de la prise (18) correspondante.

6. Procédé selon l'une quelconque des revendications précédentes, dans lequel les étapes de mesure (110), de transmission (112) et d'association (114) sont répétées avec une périodicité prédéterminée, afin que le système gestion (14) vérifie le bon fonctionnement de l'installation électrique (12) régulièrement.

7. Procédé selon l'une des revendications précédentes, **caractérisé en ce que** chaque premier (28) moyen de mémorisation comporte une étiquette radioélectrique, et **en ce que**, lors de l'étape d'acquisition a), l'acquisition d'informations se fait par ondes radioélectriques.

8. Procédé selon l'une quelconque des revendications précédentes, **caractérisé en ce que** les données géométriques comprennent des informations relatives à la forme de l'élément (16A, 16B, 16C) correspondant entre les deux extrémités de connexion (29, 30).

9. Système (14) de gestion d'une installation électrique (12) comprenant plusieurs éléments électriques (16A, 16B, 16C) pour la circulation d'un courant depuis un point d'origine vers un point de distribution électrique, chaque élément comprenant un premier moyen de mémorisation (28) d'un premier identifiant unique associé audit élément (16A, 16B, 16C), le système (14) comprenant un moyen d'identification (43) de chaque élément appartenant à l'installation (12), propre à acquérir le premier identifiant correspondant, **caractérisé en ce que** chaque premier moyen de mémorisation (28) est également propre à sauvegarder des données géométriques de l'élément (16A, 16B, 16C) correspondant, le moyen d'identification (43) étant propre à acquérir les données géométriques et à les associer au premier identifiant correspondant, et **en ce qu'**il comprend en outre un organe de calcul (26) d'une modélisation de l'installation (12) en fonction des données géométriques acquises par le moyen d'identification (43),
les éléments comprenant au moins un élément de distribution électrique (16C), chaque élément de distribution (16C) comportant un nombre prédéterminé de prises (18) de dérivation propres à être connectées chacune à un coffret (20) de dérivation électrique, chaque premier moyen de mémorisation (28) correspondant comprenant ledit nombre de prises de dérivation (18), et pour chaque élément de distribution (16C), l'organe de calcul (26) étant configuré pour calculer la modélisation en fonction du nombre de prises de dérivation (18) acquis, et
chaque élément (16A, 16B, 16C) comprenant au moins deux extrémités de connexion (29, 30), les données géométriques comprenant les positions des extrémités de connexion (29, 30) de l'élément (16A, 16B, 16C) correspondant, dans un référentiel associé à l'installation électrique (12)
chaque coffret (20) de dérivation électrique étant configuré pour mesurer une ou plusieurs grandeurs électriques relatives à l'installation électrique (12),
chaque coffret (20) de dérivation électrique étant configuré pour transmettre la ou des grandeurs mesurées à l'organe de calcul (26),
l'organe de calcul (26) étant configuré pour associer au sein de la modélisation, des grandeurs électriques mesurées au coffret de dérivation (20) correspondant et à sa position dans l'installation électrique (12).
le système de gestion (14) étant configuré pour, lorsqu'une des grandeurs électriques est supérieure à un seuil de référence, indiquer à un opérateur de la localisation d'un défaut électrique de l'élément électrique (16A, 16B, 16C) défaillant.

10. Système (14) de gestion d'une installation électrique (12) comprenant plusieurs éléments électriques (16A, 16B, 16C) pour la circulation d'un courant depuis un point d'origine vers un point de distribution électrique, chaque élément comprenant un premier moyen de mémorisation (28) d'un premier identifiant unique associé audit élément (16A, 16B, 16C), le système (14) comprenant un moyen d'identification (43) de chaque élément appartenant à l'installation (12), propre à acquérir le premier identifiant correspondant, **caractérisé en ce que** chaque premier moyen de mémorisation (28) est également propre à sauvegarder des données géométriques de l'élément (16A, 16B, 16C) correspondant, le moyen d'identification (43) étant propre à acquérir les données géométriques et à les associer au premier identifiant correspondant, et **en ce qu'**il comprend en outre un organe de calcul (26) d'une modélisation de l'installation (12) en fonction des données géométriques acquises par le moyen d'identification (43),
le moyen d'identification (43) étant en outre configuré pour acquérir chaque premier identifiant et les données géométriques associées suivant un ordre de mise en place des éléments (16A, 16B, 16C) dans l'installation, depuis un élément d'origine correspondant à un boîtier d'alimentation électrique (16A), jusqu'à un élément de fin disposé à l'opposé de l'élément d'origine par rapport au reste de l'installation (12), l'organe de calcul (26) étant configuré pour calculer la modélisation de l'installation en fonction dudit ordre de mise en place,
les éléments comprenant au moins un élément de distribution électrique (16C), chaque élément de distribution (16C) comportant un nombre prédéterminé de prises (18) de dérivation propres à être connectées chacune à un coffret (20) de dérivation électrique, chaque premier moyen de mémorisation (28) correspondant comprenant ledit nombre de prises de dérivation (18), et pour chaque élément de distribution (16C), l'organe de calcul (26) étant en outre configuré pour calculer la modélisation (108) en fonction du nombre de prises de dérivation (18) acquis, et
chaque élément (16A, 16B, 16C) comprenant au moins deux extrémités de connexion (29, 30), dont une extrémité de référence (29), les données géométriques comprenant la position des extrémités de connexion (29, 30) par rapport à l'extrémité de référence (29), l'organe de calcul (26) étant propre à calculer la position de chaque extrémité de connexion (29, 30) par rapport à l'élément d'origine (16A),
chaque coffret (20) de dérivation électrique étant configuré pour mesurer une ou plusieurs grandeurs électriques relatives à l'installation électrique (12),
chaque coffret (20) de dérivation électrique étant configuré pour transmettre la ou des grandeurs mesurées à l'organe de calcul (26),
l'organe de calcul (26) étant configuré pour associer au sein de la modélisation, des grandeurs électriques mesurées au coffret de dérivation (20) correspondant et à sa position dans l'installation électrique (12).
le système de gestion (14) étant configuré pour, lorsqu'une des grandeurs électriques est supérieure à un seuil de référence, indiquer à un opérateur de la localisation d'un défaut électrique de l'élément électrique (16A, 16B, 16C) défaillant.

11. Système selon la revendication 9 ou 10, **caractérisé en ce que** la ou chaque prise de dérivation (18) comprend un deuxième moyen (32) de mémorisation d'un numéro de référence unique associé à ladite prise (18), et **en ce que** chaque coffret de dérivation (20) comprend un organe d'identification (34) propre à acquérir le numéro de référence de la ou des prises de dérivation (18) auxquelles ledit coffret (20) est connecté.

12. Système selon la revendication 11, **caractérisé en ce que** chaque premier (28) et deuxième (32) moyen de mémorisation comporte des étiquettes radioélectriques propres à communiquer par ondes radioélectriques avec le moyen d'identification (43) respectivement l'organe d'identification (34).

## Patentansprüche

1. Verfahren zum Verwalten einer elektrischen Anlage (12), umfassend mehrere elektrische Elemente (16A, 16B, 16C) für den Fluss eines Stroms von einem Ursprungspunkt zu einem elektrischen Verteilungspunkt, jedes Element umfassend eine erste Speichereinrichtung (28) einer ersten eindeutigen Kennung, die mit dem Element (16A, 16B, 16C) assoziiert ist, das Verfahren umfassend den folgenden Schritt:
- a) Erfassen (100), mittels einer Identifizierungseinrichtung (43), der ersten Kennung von jedem Element (16A, 16B, 16C), das zu der Anlage (12) gehört,
**dadurch gekennzeichnet, dass** jede erste Speichereinrichtung (28) auch geeignet ist, geometrische Daten des entsprechenden Elements zu speichern, wobei die Daten während des Erfassungsschritts a) über die Identifizierungseinrichtung (43) erfasst werden und mit der entsprechenden ersten Kennung assoziiert sind, und
dass das Verfahren ferner den folgenden Schritt umfasst:
- b) Berechnen (108), mittels einer Recheneinheit (26), einer Modellierung der elektrischen Anlage abhängig von den erfassten geometrischen Daten,
die Elemente umfassend mindestens ein elektrisches Verteilungselement (16C), jedes Verteilungselement (16C) umfassend eine vorbestimmte Anzahl von Abzweigbuchsen (18) aufweist, die geeignet sind, jeweils mit einem elektrischen Abzweigkasten (20) verbunden zu sein, jede entsprechende erste Speichereinrichtung (28) umfassend die Anzahl von Abzweigbuchsen (18), und wobei für jedes Verteilungselement (16C) die Berechnung der Modellierung (108) abhängig von der erfassten Anzahl von Abzweigbuchsen (18) durchgeführt wird,
jedes Element (16A, 16B, 16C) umfassend mindestens zwei Verbindungsenden (29, 30) umfasst, die geometrischen Daten umfassend die Positionen der Verbindungsenden (29, 30) des entsprechenden Elements (16A, 16B, 16C) in einem mit der elektrischen Anlage (12) assoziierten Bezugssystem,
anschließend umfasst das Verfahren in dem Berechnungsschritt b), die folgenden Schritte:
- c) Messen (110), durch jeden elektrischen Abzweigkasten (20), von einer oder mehreren elektrischen Größen in Bezug auf die elektrische Anlage (12),
- d) Übertragen (112) der gemessenen Größe(n) an die Recheneinheit (26),
- e) Assoziieren (114), im Rahmen der Modellierung, der gemessenen elektrischen Größen mit dem entsprechenden Abzweigkasten (20) und zu seiner Position in der elektrischen Anlage (12),
das Verfahren ferner umfassend, wenn eine der elektrischen Größen größer ist als ein Referenzschwellenwert, eine Angabe an einen Bediener, der Stelle eines elektrischen Fehlers des fehlerhaften elektrischen Elements (16A, 16B, 16C).

2. Verfahren nach Anspruch 1, **dadurch gekennzeichnet, dass** während des Erfassungsschritts a) die Identifizierungseinrichtung (43) jede erste Kennung und die assoziierten geometrischen Daten gemäß einer Anordnungsreihenfolge der Elemente (16A, 16B, 16C) in der Anlage erfasst, von einem Ursprungselement, das einem Stromversorgungsgehäuse (16A) entspricht, bis zu einem Endelement, das in Bezug auf den Rest der Anlage (12) gegenüber dem Ursprungselement angeordnet ist, wobei die Berechnung (108) der Modellierung abhängig von der genannten Anordnungsreihenfolge durchgeführt wird.

3. Verfahren zum Verwalten einer elektrischen Anlage (12), umfassend mehrere elektrische Elemente (16A, 16B, 16C) für den Fluss eines Stroms von einem Ursprungspunkt zu einem elektrischen Verteilungspunkt, jedes Element umfassend eine erste Speichereinrichtung (28) einer ersten eindeutigen Kennung, die mit dem Element (16A, 16B, 16C) assoziiert ist, das Verfahren umfassend den folgenden Schritt:
- a) Erfassen (100), mittels einer Identifizierungseinrichtung (43), der ersten Kennung von jedem Element (16A, 16B, 16C), das zu der Anlage (12) gehört,
**dadurch gekennzeichnet, dass** jede erste Speichereinrichtung (28) auch geeignet ist, geometrische Daten des entsprechenden Elements zu speichern, wobei die Daten während des Erfassungsschritts a) über die Identifizierungseinrichtung (43) erfasst werden und mit der entsprechenden ersten Kennung assoziiert sind,
dass das Verfahren ferner den folgenden Schritt umfasst:
- b) Berechnen (108), mittels einer Recheneinheit (26), einer Modellierung der elektrischen Anlage abhängig von den erfassten geometrischen Daten,
während des Erfassungsschritts a) erfasst die Identifizierungseinrichtung (43) jede erste Kennung und die assoziierten geometrischen Daten gemäß einer Anordnungsreihenfolge der Elemente (16A, 16B, 16C) in der Anlage, von einem Ursprungselement, das einem Stromversorgungsgehäuse (16A) entspricht, bis zu einem Endelement, das in Bezug auf den Rest der Anlage (12) gegenüber dem Ursprungselement angeordnet ist, wobei die Berechnung (108) der Modellierung abhängig von der genannten Anordnungsreihenfolge durchgeführt wird,
die Elemente umfassend mindestens ein elektrisches Verteilungselement (16C), jedes Verteilungselement (16C) umfassend eine vorbestimmte Anzahl von Abzweigbuchsen (18), die geeignet sind, um jeweils mit einem elektrischen Abzweigkasten (20) verbunden zu werden,
jede entsprechende erste Speichereinrichtung (28) umfassend die Anzahl von Abzweigbuchsen (18), und wobei die Berechnung der Modellierung (108) für jedes Verteilungselement (16C) abhängig von der erfassten Anzahl von Abzweigbuchsen (18) durchgeführt wird,
jedes Element (16A, 16B, 16C) umfassend mindestens zwei Verbindungsenden (29, 30), darunter ein Referenzende (29), die geometrischen Daten umfassend die Position der Verbindungsenden (29, 30) in Bezug auf das Referenzende (29), wobei die Recheneinheit geeignet ist, um die Position von jedem Verbindungsende (29, 30) in Bezug auf das Ursprungselement (16A) zu berechnen,
anschließend umfasst das Verfahren in dem Berechnungsschritt b), die folgenden Schritte:
- c) Messen (110), durch jeden elektrischen Abzweigkasten (20), von einer oder mehreren elektrischen Größen in Bezug auf die elektrische Anlage (12),
- d) Übertragen (112) der gemessenen Größe(n) an die Recheneinheit (26),
- e) Assoziieren (114), im Rahmen der Modellierung, der gemessenen elektrischen Größen mit dem entsprechenden Abzweigkasten (20) und zu seiner Position in der elektrischen Anlage (12),
das Verfahren ferner umfassend, wenn eine der elektrischen Größen größer ist als ein Referenzschwellenwert, eine Angabe an einen Bediener, der Stelle eines elektrischen Fehlers des fehlerhaften elektrischen Elements (16A, 16B, 16C).

4. Verfahren nach einem der vorherigen Ansprüche, **dadurch gekennzeichnet, dass** das Verfahren vor dem Berechnungsschritt b) die folgenden Schritte umfasst:
- a') Verbinden (104) eines oder mehrerer Abzweigkästen (20) an einer oder mehrerer Abzweigbuchsen (18), die oder jede Abzweigbuchse umfassend eine zweite Speichereinrichtung (32) einer eindeutigen Referenznummer, die mit der Buchse assoziiert ist,
- a") Erfassen (105) der Referenznummer von jeder Abzweigbuchse (18), die mit einem Abzweigkasten (20) verbunden ist.

5. Verfahren nach Anspruch 4, **dadurch gekennzeichnet, dass** das Verfahren nach dem Erfassungsschritt a") für jeden Abzweigkasten (20) den folgenden Schritt umfasst:
- a‴) Übertragen der entsprechenden Referenznummer und einer zweiten eindeutigen Kennung, die mit dem Abzweigkasten (20) assoziiert ist, an die Recheneinheit (26), wobei die Recheneinheit (26) im Lauf des Rechenschritts b) dazu geeignet ist, jeden Abzweigkasten (20) zu modellieren und ihn im Rahmen der Modellierung mit der Position der entsprechenden Buchse (18) zu assoziieren.

6. Verfahren nach einem der vorherigen Ansprüche, wobei die Schritte eines Messens (110), Übertragens (112) und Assoziierens (114) mit einer vorbestimmten Periodizität wiederholt werden, damit das Verwaltungssystem (14) die korrekte Funktion der elektrischen Anlage (12) regelmäßig überprüft.

7. Verfahren nach einem der vorherigen Ansprüche, **dadurch gekennzeichnet, dass** jede erste (28) Speichereinrichtung ein Funketikett umfasst, und dass bei dem Erfassungsschritt a) das Erfassen von Informationen durch Funkwellen erfolgt.

8. Verfahren nach einem der vorherigen Ansprüche, **dadurch gekennzeichnet, dass** die geometrischen Daten Informationen in Bezug auf die Form des entsprechenden Elements (16A, 16B, 16C) zwischen den zwei Verbindungsenden (29, 30) umfassen.

9. System (14) zum Verwalten einer elektrischen Anlage (12), umfassend mehrere elektrische Elemente (16A, 16B, 16C) für den Fluss eines Stroms von einem Ursprungspunkt zu einem elektrischen Verteilungspunkt, jedes Element umfassend eine erste Speichereinrichtung (28) einer ersten eindeutigen Kennung, die mit dem Element (16A, 16B, 16C) assoziiert ist, das System (14) umfassend eine Identifizierungseinrichtung (43) von jedem zu der Anlage (12) gehörenden Element, das geeignet ist, um die entsprechende erste Kennung zu erfassen, **dadurch gekennzeichnet, dass** jede erste Speichereinrichtung (28) auch geeignet ist, geometrische Daten des entsprechenden Elements (16A, 16B, 16C) zu speichern, wobei die Identifizierungseinrichtung (43) geeignet ist, die geometrischen Daten zu erfassen und sie mit der entsprechenden ersten Kennung zu assoziieren, und dadurch, dass es ferner eine Recheneinheit (26) einer Modellierung der Anlage (12) abhängig von den durch die Identifizierungseinrichtung (43) erfassten geometrischen Daten umfasst,
die Elemente umfassend mindestens ein elektrisches Verteilungselement (16C), jedes Verteilungselement (16C) umfassend eine vorbestimmte Anzahl von Abzweigbuchsen (18) aufweist, die geeignet sind, jeweils mit einem elektrischen Abzweigkasten (20) verbunden zu sein, jede entsprechende erste Speichereinrichtung (28) umfassend die Anzahl von Abzweigbuchsen (18), und wobei die Recheneinheit (26) für jedes Verteilungselement (16C) konfiguriert ist, um die Modellierung abhängig von der erfassten Anzahl von Abzweigbuchsen (18) zu berechnen, und
jedes Element (16A, 16B, 16C) umfassend mindestens zwei Verbindungsenden (29, 30) umfasst, die geometrischen Daten umfassend die Positionen der Verbindungsenden (29, 30) des entsprechenden Elements (16A, 16B, 16C) in einem mit der elektrischen Anlage (12) assoziierten Bezugssystem,
wobei jeder elektrische Abzweigkasten (20) konfiguriert ist, um eine oder mehrere elektrische Größen in Bezug auf die elektrische Anlage (12) zu messen,
wobei jeder elektrische Abzweigkasten (20) konfiguriert ist, um die gemessenen Größen an die Recheneinheit (26) zu übertragen,
wobei die Recheneinheit (26) konfiguriert ist, um im Rahmen der Modellierung gemessene elektrische Größen mit dem entsprechenden Abzweigkasten (20) und seiner Position in der elektrischen Anlage (12) zu assoziieren.
wobei das Verwaltungssystem (14) konfiguriert ist, um, wenn eine der elektrischen Größen größer ist als ein Referenzschwellenwert, einem Bediener die Stelle eines elektrischen Fehlers des fehlerhaften elektrischen Elements (16A, 16B, 16C) anzugeben.

10. System (14) zum Verwalten einer elektrischen Anlage (12), umfassend mehrere elektrische Elemente (16A, 16B, 16C) für den Fluss eines Stroms von einem Ursprungspunkt zu einem elektrischen Verteilungspunkt, jedes Element umfassend eine erste Speichereinrichtung (28) einer ersten eindeutigen Kennung, die mit dem Element (16A, 16B, 16C) assoziiert ist, das System (14) umfassend eine Identifizierungseinrichtung (43) von jedem zu der Anlage (12) gehörenden Element, das geeignet ist, um die entsprechende erste Kennung zu erfassen, **dadurch gekennzeichnet, dass** jede erste Speichereinrichtung (28) auch geeignet ist, geometrische Daten des entsprechenden Elements (16A, 16B, 16C) zu speichern, wobei die Identifizierungseinrichtung (43) geeignet ist, die geometrischen Daten zu erfassen und sie mit der entsprechenden ersten Kennung zu assoziieren, und dadurch, dass es ferner eine Recheneinheit (26) einer Modellierung der Anlage (12) abhängig von den durch die Identifizierungseinrichtung (43) erfassten geometrischen Daten umfasst,
wobei die Identifizierungseinrichtung (43) ferner konfiguriert ist, um jede erste Kennung und die assoziierten geometrischen Daten gemäß einer Anordnungsreihenfolge der Elemente (16A, 16B, 16C) in der Anlage, von einem Ursprungselement, das einem Stromversorgungsgehäuse (16A) entspricht, bis zu einem Endelement, das in Bezug auf den Rest der Anlage (12) gegenüber dem Ursprungselement angeordnet ist, zu erfassen, wobei die Recheneinheit (26) konfiguriert ist, um die Modellierung der Anlage abhängig von der Anordnungsreihenfolge zu berechnen,
die Elemente umfassend mindestens ein elektrisches Verteilungselement (16C), jedes Verteilungselement (16C) umfassend eine vorbestimmte Anzahl von Abzweigbuchsen (18) aufweist, die geeignet sind, jeweils mit einem elektrischen Abzweigkasten (20) verbunden zu sein, jede entsprechende erste Speichereinrichtung (28) umfassend die Anzahl von Abzweigbuchsen (18), und wobei die Recheneinheit (26) für jedes Verteilungselement (16C) ferner konfiguriert ist, um die Modellierung (108) abhängig von der erfassten Anzahl von Abzweigbuchsen (18) zu berechnen, und
jedes Element (16A, 16B, 16C) umfassend mindestens zwei Verbindungsenden (29, 30), darunter ein Referenzende (29), die geometrischen Daten umfassend die Position der Verbindungsenden (29, 30) in Bezug auf das Referenzende (29), wobei die Recheneinheit (26) geeignet ist, um die Position von jedem Verbindungsende (29, 30) in Bezug auf das Ursprungselement (16A) zu berechnen,
wobei jeder elektrische Abzweigkasten (20) konfiguriert ist, um eine oder mehrere elektrische Größen in Bezug auf die elektrische Anlage (12) zu messen,
wobei jeder elektrische Abzweigkasten (20) konfiguriert ist, um die gemessenen Größen an die Recheneinheit (26) zu übertragen,
wobei die Recheneinheit (26) konfiguriert ist, um im Rahmen der Modellierung gemessene elektrische Größen mit dem entsprechenden Abzweigkasten (20) und seiner Position in der elektrischen Anlage (12) zu assoziieren,
wobei das Verwaltungssystem (14) konfiguriert ist, um, wenn eine der elektrischen Größen größer ist als ein Referenzschwellenwert, einem Bediener die Stelle eines elektrischen Fehlers des fehlerhaften elektrischen Elements (16A, 16B, 16C) anzugeben.

11. System nach Anspruch 9 oder 10, **dadurch gekennzeichnet, dass** die oder jede Abzweigbuchse (18) eine zweite Speichereinrichtung (32) einer eindeutigen Referenznummer umfasst, die mit dieser Buchse (18) assoziiert ist, und dass jeder Abzweigkasten (20) eine Identifizierungseinheit (34) umfasst, die geeignet ist, um die Referenznummer der Abzweigbuchse(n) (18) zu erfassen, mit denen der Kasten (20) verbunden ist.

12. System nach Anspruch 11, **dadurch gekennzeichnet, dass** jede erste (28) und zweite (32) Speichereinrichtung Funketiketten umfasst, die geeignet sind, um über Funkwellen mit der Identifizierungseinrichtung (43) bzw. der Identifizierungseinheit (34) zu kommunizieren.

## Claims

1. A management method for managing an electrical installation (12) comprising several electrical elements (16A, 16B, 16C) in order to circulate a current from a point of origin to a point of electrical power distribution, each element comprising a first memory means (28) for storing a first unique identifier associated with said element (16A, 16B, 16C), the method comprising the following step:
- a) acquiring (100), via an identification means (43), the first identifier of each element (16A, 16B, 16C) belonging to the installation (12),
**characterized in that** each first memory means (28) is also capable of saving geometric data of the corresponding element, said data being acquired during the acquisition step a), via the identification means (43), and associated with the corresponding first identifier, and
**in that** the method further comprises the following step:
- b) computing (108), via a processor (26), a model of the electrical installation based on the acquired geometric data,
the elements comprising at least one electrical power distribution element (16C), each distribution element (16C) having a predetermined number of electrical tap off outlets (18) capable of each being connected to an electrical tap off box (20), wherein each corresponding first memory means (28) comprises said number of tap off outlets (18), and wherein for each electrical power distribution element (16C), the computation of the model (108) is performed based on the acquired number of tap off outlets (18),
each element (16A, 16B, 16C) comprising at least two connection ends (29, 30), the geometric data comprising the positions of the connection ends (29, 30) of the corresponding element (16A, 16B, 16C), in a coordinate system associated with the electrical installation (12),
after the computation step b), the method comprising the following steps:
- c) measuring (110), by each electrical tap off box (20), one or more electrical properties relative to the electrical installation (12),
- d) transmitting (112) the measured property or properties to the computing member (26),
- e) associating (114), within the model, the measured electrical properties with the corresponding electrical tap off box (20) and with its position in the electrical installation (12), the method further comprising, when one of the electrical properties is above a reference threshold, an indication to an operator of the location of an electrical fault of the faulty electrical element (16A, 16B, 16C).

2. The method according to claim 1, **characterized in that** during the acquisition step a), the identification means (43) acquires each first identifier and the associated geometric data in accordance with an order of setting in position of the elements (16A, 16B, 16C) in the installation, from an origin point element corresponding to an electrical power supply unit (16A) to an end point element disposed opposite the origin point element relative to the rest of the installation (12), the computation (108) of the model being done based on said positioning order.

3. A management method for managing an electrical installation (12) comprising several electrical elements (16A, 16B, 16C) in order to circulate a current from a point of origin to a point of electrical power distribution, each element comprising a first memory means (28) for storing a first unique identifier associated with said element (16A, 16B, 16C), the method comprising the following step:
- a) acquiring (100), via an identification means (43), the first identifier of each element (16A, 16B, 16C) belonging to the installation (12),
**characterized in that** each first memory means (28) is also capable of saving geometric data of the corresponding element, said data being acquired during the acquisition step a), via the identification means (43), and associated with the corresponding first identifier,
**in that** the method further comprises the following step:
- b) computing (108), via a processor (26), a model of the electrical installation based on the acquired geometric data,
during the acquisition step a), the identification means (43) acquiring each first identifier and the associated geometric data according to an order of positioning of the elements (16A, 16B, 16C) in the installation, from an origin point element corresponding to an electrical power supply unit (16A) to an end point element disposed opposite the origin point element relative to the rest of the installation (12), the computation (108) of the model being done based on said positioning order,
the elements comprising at least one electrical power distribution element (16C), each distribution element (16C) having a predetermined number of electrical tap off outlets (18) capable of each being connected to an electrical tap off box (20), wherein each corresponding first memory means (28) comprises said number of tap off outlets (18), and wherein for each electrical power distribution element (16C), the computation of the model (108) is performed based on the acquired number of tap off outlets (18),
each element (16A, 16B, 16C) comprising at least two connection ends (29, 30), including a reference end (29), the geometric data comprising the position of the connection ends (29, 30) relative to the reference end (29), the computing member being able to compute the position of each connection end (29, 30) relative to the origin point element (16A),
after the computation step b), the method comprising the following steps:
- c) measuring (110), by each electrical tap off box (20), one or more electrical properties relative to the electrical installation (12),
- d) transmitting (112) the measured property or properties to the computing member (26),
- e) associating (114), within the model, the measured electrical properties with the corresponding electrical tap off box (20) and with its position in the electrical installation (12),
the method further comprising, when one of the electrical properties is above a reference threshold, an indication to an operator of the location of an electrical fault of the faulty electrical element (16A, 16B, 16C).

4. The method according to one of the preceding claims, **characterized in that** the method comprises, prior to the computation step b), the following steps:
- a') connecting (104) one or more electrical tap off boxes (20) to one or more tap off outlets (18), the or each tap off outlet comprising a second memory means (32) for storing a unique reference number associated with said outlet,
- a") acquiring (105) the reference number of each tap off outlet (18) connected to an electrical tap off box (20).

5. The method according to claim 4, **characterized in that**, following the acquisition step a"), the method comprises, for each electrical tap off box (20), the following step:
- a‴) transmitting, to the computing member (26), the corresponding reference number and a second unique identifier associated with the electrical tap off box (20), the computing member (26) being able, during the computing step b), to model each electrical tap off box (20) and to associate it, within the model, with the position of the corresponding tap off outlet (18).

6. The method according to any one of the preceding claims, wherein the measurement (110), transmission (112) and association (114) steps are repeated with a predetermined periodicity, so that the management system (14) verifies the proper working of the electrical installation (12) regularly.

7. The method according to one of the preceding claims, **characterized in that** each first (28) memory means includes a radio tag, and **in that**, during the acquisition step a), information is acquired by radio waves.

8. The method according to any one of the preceding claims, **characterized in that** the geometric data comprise information relative to the form of the corresponding element (16A, 16B, 16C) between the two connection ends (29, 30).

9. A system (14) for managing an electrical installation (12) comprising several electrical elements (16A, 16B, 16C) in order to circulate a current from a point of origin to a point of electrical distribution, each element comprising a first memory means (28) for storing a first unique identifier associated with said element (16A, 16B, 16C), the system (14) comprising an identification means (43) for identifying each element belonging to the installation (12), capable of acquiring the corresponding first identifier, **characterized in that** each first memory means (28) is also capable of saving geometric data of the corresponding element (16A, 16B, 16C), the identification means (43) being capable of acquiring the geometric data and associating them with the corresponding first identifier, and **in that** it further comprises a computing member (26) for computing a model of the installation (12) based on the geometric data acquired by the identification means (43),
the elements comprising at least one electrical power distribution element (16C), each distribution element (16C) having a predetermined number of tap off outlets (18) each capable of being connected to an electrical tap off box (20), each corresponding first memory means (28) comprising said number of tap off outlets (18), and for each electrical power distribution element (16C), the computing member (26) being configured to compute the model based on the acquired number of tap off outlets (18), and
each element (16A, 16B, 16C) comprising at least two connection ends (29, 30), the geometric data comprising the positions of the connection ends (29, 30) of the corresponding element (16A, 16B, 16C), in a coordinate system associated with the electrical installation (12),
each electrical tap off box (20) being configured to measure one or more electrical properties relative to the electrical installation (12),
each electrical tap off box (20) being configured to transmit the measured property or properties to the computing member (26),
the computing member (26) being configured to associate, within the model, the measured electrical properties with the corresponding tap off box (20) and its position in the electrical installation (12),
the management system (14) being configured, when one of the electrical properties is above a reference threshold, to indicate the location of an electrical fault of the faulty electrical element (16A, 16B, 16C) to an operator.

10. A system (14) for managing an electrical installation (12) comprising several electrical elements (16A, 16B, 16C) in order to circulate a current from a point of origin to a point of electrical distribution, each element comprising a first memory means (28) for storing a first unique identifier associated with said element (16A, 16B, 16C), the system (14) comprising an identification means (43) for identifying each element belonging to the installation (12), capable of acquiring the corresponding first identifier, **characterized in that** each first memory means (28) is also capable of saving geometric data of the corresponding element (16A, 16B, 16C), the identification means (43) being capable of acquiring the geometric data and associating them with the corresponding first identifier, and **in that** it further comprises a computing member (26) for computing a model of the installation (12) based on the geometric data acquired by the identification means (43),
the identification means (43) further being configured to acquire each first identifier and the associated geometric data in a positioning order of the elements (16A, 16B, 16C) in the installation, from an origin point element corresponding to an electrical power supply unit (16A), to an end point element disposed opposite the origin point element relative to the rest of the installation (12), the computation member (26) being configured to compute the model of the installation based on said positioning order,
the elements comprising at least one electrical power distribution element (16C), each distribution element (16C) having a predetermined number of tap off outlets (18) each capable of being connected to an electrical tap off box (20), each corresponding first memory means (28) comprising said number of tap off outlets (18), and for each distribution element (16C), the computing member (26) further being configured to compute the model (108) based on the acquired number of tap off outlets (18), and
each element (16A, 16B, 16C) comprising at least two connection ends (29, 30), including a reference end (29), the geometric data comprising the position of the connection ends (29, 30) relative to the reference end (29), the computing member (26) being able to compute the position of each connection end (29, 30) relative to the origin point element (16A),
each electrical tap off box (20) being configured to measure one or more electrical properties relative to the electrical installation (12),
each electrical tap off box (20) being configured to transmit the measured property or properties to the computing member (26),
the computing member (26) being configured to associate, within the model, the measured electrical properties with the corresponding tap off box (20) and its position in the electrical installation (12),
the management system (14) being configured, when one of the electrical properties is above a reference threshold, to indicate the location of an electrical fault of the faulty electrical element (16A, 16B, 16C) to an operator.

11. The system according to claim 9 or 10, **characterized in that** the or each tap off outlet (18) comprises a second memory means (32) for storing a unique reference number associated with said outlet (18), and **in that** each tap off box (20) comprises an identification member (34) capable of acquiring the reference number of the tap off outlet(s) (18) to which said box (20) is connected.

12. The system according to claim 11, **characterized in that** each first (28) and second (32) memory means has radio tags capable of communicating by radio waves with the identification means (43), the identification member (34), respectively.
